## Europäisches Patentamt
## European Patent Office
## Office européen des brevets

(11) Veröffentlichungsnummer: **0 225 626**
**A2**

(12) # EUROPÄISCHE PATENTANMELDUNG

(21) Anmeldenummer: **86117053.8**

(22) Anmeldetag: **08.12.86**

(51) Int. Cl.⁴: **H01G 1/14**

(30) Priorität: **11.12.85 DE 3543653**

(43) Veröffentlichungstag der Anmeldung:
**16.06.87 Patentblatt 87/25**

(84) Benannte Vertragsstaaten:
**BE DE FR GB IT SE**

(71) Anmelder: **Standard Elektrik Lorenz Aktiengesellschaft Lorenzstrasse 10 D-7000 Stuttgart 40(DE)**

(72) Erfinder: **Heil, Horst Franz, Dr. Hordlerstrasse 6 D-8500 Nürnberg 60(DE)**

(74) Vertreter: **Hösch, Günther, Dipl.-Ing. et al c/o Standard Elektrik Lorenz AG Patent- und Lizenzwesen Kurze Strasse 8 Postfach 300 929 D-7000 Stuttgart 30(DE)**

(54) **Elektrischer Kondensator.**

(57) Bei einem elektrischen Kondensator mit gewickeltem oder geschichtetem Kondensatorkörper, der an zwei Stirnseiten kontaktiert ist, indem die Stirnseiten mit einer Metallschicht versehen sind, die die Kondensatorbeläge kontaktieren und an die ein Anschlußdraht angeschweißt ist, besteht der Anschlußdraht erfindungsgemäß aus einem mit einer Nickelschicht (9) und anschließend mit einer Zinn- oder Zinn-Blei-Schicht (10) versehenen Draht, insbesondere aus Kupfer. Hierdurch wird die Abreißfestigkeit des Anschlußdrahtes (7) erhöht.

EP 0 225 626 A2

## Elektrischer Kondensator

Die vorliegende Erfindung bezieht sich auf einen elektrischen Kondensator gemäß dem Oberbegriff des Anspruchs 1.

Bei derartigen bekannten Kondensatoren sind die Stirnseiten üblicherweise mit einer durch Schoopen aufgebrachten Stirnkontaktschicht aus Zink beschichtet. Auf diese ist das Ende eines verzinnten Kupferdrahtes durch Punktschweißen, z.B. durch Widerstandsschweißen, angeschweißt. Diese Schweißverbindung muß eine genügend hohe Abreißfestigkeit besitzen und muß außerdem den elektrischen Belastungen wie kurzzeitigen Hochstrombelastungen, gewachsen sein.

Das mechanische Problem kann dadurch gelöst werden, daß ausreichend dicke Anschlußdrähte verwendet werden. Die Dicke der Anschlußdrähte ist jedoch aus elektrischen Gründen meist nicht erforderlich und auch nicht erwünscht, da dann unter Umständen nicht mehr gleichartige Bohrungen in einer Leiterplatte etc. verwendet werden können. Eine größere Dicke ist außerdem kosten-und materialintensiv. Es wurde jedoch festgestellt, daß bei Kondensatoren, bei denen nach dem Anschweißen der Anschlußdrähte die geforderte Abreißfestigkeit an der Schweißstelle vorhanden ist, diese Festigkeit stark abnimmt, wenn der Kondensator über längere Zeit thermisch hoch belastet wird.

Untersuchungen haben ergeben, daß die Verringerung der Abreißfestigkeit vermutlich auf eine Gefügeumwandlung und dadurch bedingte Versprödung des Materials im Bereich der Bindungszone der Schweißstelle zurückzuführen ist und daß dieser Effekt auch noch nach langer Lagerzeit auftreten kann. So wurde festgestellt, daß nach dem Schweißvorgang an der Schweißstelle nach dem Abreißen die Merkmale von Verformungsbrüchen durch die Schoopschicht erkennbar sind, wogegen nach einem folgenden Temperaturprozeß z.B. über 130 Stunden bei 100 °C an der Drahtoberfläche spröde Anrisse vorhanden sind und der Bruch über große Flächenbereiche glatt und spröde direkt oberhalb der Diffusionszone eines aus Kupfer bestehenden Anschlußdrahtes aber auch z.T. noch einige μm in der Schoopschicht verläuft.

Mit der Erfindung soll daher die Aufgabe gelöst werden, die Abreißfestigkeit insbesondere für solche Anwendungsfälle zu erhöhen, bei denen eine hohe Temperatur auftreten kann.

Erfindungsgemäß wird diese Aufgabe durch die im Kennzeichen des Anspruchs 1 angegebenen Maßnahmen gelöst. Es hat sich gezeigt, daß bei Anwendung der Nickelschicht eine Gefügeumwandlung, die zu einer Versprödung des Materials im Bereich der Schweißstelle führt, nicht oder jedenfalls nicht im vorher bekannten Maß auftritt. Bei Abreißversuchen kommt es dann nicht mehr zum Abreißen des Anschlußdrahtes infolge einer Versprödung, sondern es ist deutlich ein Verformungsbruch erkennbar. Hierdurch erhält man eine höhere Abreißkraft.

Als Abreißdraht wird zweckmäßig ein Kupferoder Broncedraht verwendet. Die Nickelschicht besitzt eine Dicke von etwa 1 bis 10 μm, insbesondere von 2 bis 3 μm. Sie kann durch alle geeignete Maßnahmen aufgebracht werden. Vorzugsweise ist sie jedoch galvanisch abgeschieden. Die auf der Nickelschicht befindliche Zinn-oder Zinn-Blei-Schicht besitzt eine Dicke von 3 bis 15 μm, insbesondere von 5 bis 7 μm und kann ebenfalls durch bekannte Verfahren, vorzugsweise jedoch galvanisch, aufgebracht werden. Bei Verwendung einer Zinn-Blei-Legierung beträgt der Bleianteil zweckmäßig 2 bis 15 Gew.%, insbesondere 3 bis 8 Gew.%. Die Stirnkontaktschicht besteht in der Regel aus einer durch Schoopen aufgebrachten Zinkschicht.

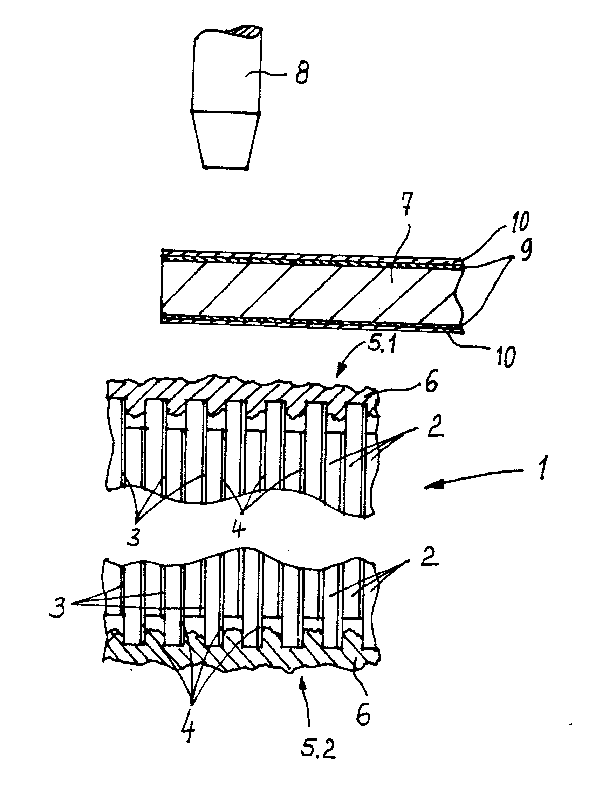

In der Zeichnung ist ein Ausschnitt eines Kondensatorkörpers 1 gezeigt. Er besteht aus dielektrischen Folien 2 und die Kondensatorbeläge bilden den Metallbelägen 3, 4, die ggf. als selbständige Folien vorgesehen sein können oder auf die dielektrischen Folien 2 aufmetallisiert sein können. Auf diese konstruktive Ausgestaltung kommt es hierbei jedoch nicht entscheidend an und es können daher auch andere Folien-und Metall-Konstruktionen, beispielsweise mit oder ohne zusätzliche Isolierzwischenlagen oder saugfähigen Lagen etc. und unterschiedlichen isolierenden oder elektrisch leitfähigen Materialien verwendet werden.

Die einen Metallbeläge 3, die den einen Kondensatorbelag bilden, stehen an einer Stirnseite 5.1 über, wogegen die den anderen Kondensatorbelag bildenden Metallbeläge 4 an der Stirnseite 5.1 derart versenkt angeordnet sind, daß eine beispielsweise durch Schoopen aufgebrachte Stirnkontaktschicht 6 nur die überstehenden Metallbeläge 3 kontaktiert. An der anderen Stirnseite 5.2 stehen dann die zweitgenannten Metallbeläge 4 über und die Metallbeläge 3 sind versenkt angeordnet. Die auch auf diese Stirnseite 5.2 aufgebrachte Stirnkontaktschicht 6 besteht vorzugsweise aus Zink.

Erfindungsgemäß wird ein Anschlußdraht 7 mittels einer Schweißelektrode 8 auf die Stirnkontaktschicht 6 aufgeschweißt, der zunächst mit einer Nickelschicht 9 und dann mit der Zinn-oder Zinn-Blei-Schicht 10 versehen ist.

Die Herstellung eines erfindungsgemäßen Kondensators erfolgt so, daß zunächst der Kondensatorkörper 1 z.B. durch Wickeln oder Schichten von dielektrischen und elektrisch leitfähigen Materialien hergestellt wird, so daß die beiden Kondensatorbeläge 3, 4, wie oben beschrieben, an den entsprechenden Stirnseiten 5.1 bzw. 5.2 überstehen. Hierauf wird auf jeder Seite die Stirnkontaktschicht 6 aufgebracht, z.B. aufgesprüht oder aufgespritzt, insbesondere durch Schoopen aufgebracht und dann der mit einer Nickelschicht 9 und anschließend mit einer Zinn-oder Zinn-Blei-Schicht 10 versehene Anschlußdraht 7 angeschweißt. Anschließend wird der Kondensatorkörper 1, gegf. nachdem er in einen Gehäusebecher eingebracht wurde, einem Temperaturprozeß bei einer Temperatur zwischen 80 und 150°C, insbesondere zwischen 100 und 130°C unterzogen, der zwischen 2 und 200 Stunden aufrechterhalten wird und zur Trocknung und/oder Alterung etc. des Kondensatorkörpers 1 dient. Anschließend oder vorher kann der Kondensatorkörper 1 auch mit einem geeigneten isolierenden Imprägniermittel imprägniert werden. Dabei kann eine erste Temperaturbehandlung bei 80 bis 130°C für eine Zeitdauer von 10 bis 200 Stunden vorgenommen und anschließend imprägniert werden und dann nochmals eine zweite Temperaturbehandlung bei einer Temperatur zwischen 80 und 120°C für eine Zeitdauer von 2 bis 200 Stunden erfolgen. Dabei kann zumindest eine, z.B. die erste Temperaturbehandlung, unter vermindertem Druck oder bei Überdruck erfolgen. Zweckmäßig erfolgt vor oder während der anschließenden Abkühlung jeweils eine entsprechende Erhöhung bzw. Erniedrigung des Druckes auf normalen Atmosphärendruck.

## Ansprüche

1. Elektrischer Kondensator mit gewickeltem oder geschichtetem Kondensatorkörper, der an zwei Stirnseiten kontaktiert ist, indem die Stirnseiten mit einer Metallschicht versehen sind, die die Kondensatorbeläge kontaktieren und an die ein Anschlußdraht angeschweißt ist, **dadurch gekennzeichnet**, daß der Anschlußdraht (7) eine Nickelschicht (9) und eine darauf angebrachte Zinn-oder Zinn-Blei-Schicht (10) aufweist.

2. Kondensator nach Anspruch 1, dadurch gekennzeichnet, daß die Nickelschicht (9) eine Dicke von 1 bis 10 $\mu$m aufweist.

3. Kondensator nach Anspruch 2, dadurch gekennzeichnet, daß die Dicke 2 bis 3$\mu$m beträgt.

4. Kondensator nach einem der Ansprüche 1 bis 3, dadurch gekennzeichnet, daß die Zinn-oder Zinn-Blei-Schicht (10) eine Dicke von 3 bis 15$\mu$m aufweist.

5. Kondensator nach Anspruch 4, dadurch gekennzeichnet, daß die Dicke 5 bis 7$\mu$m beträgt.

6. Kondensator nach einem der Ansprüche 1 bis 5, dadurch gekennzeichnet, daß die Nickeldschicht (9) galvanisch aufgebracht ist.

7. Kondensator nach einem der Ansprüche 1 bis 6, dadurch gekennzeichnet, daß die Zinn-oder Zinn-Blei-Schicht (10) galvanisch aufgebracht ist.

8. Kondensator nach einem der Ansprüche 1 bis 7, dadurch gekennzeichnet, daß bei Verwendung einer Zinn-Blei-Schicht (10) der Bleigehalt 3 bis 8 Gew.% beträgt.

9. Kondensator nach einem der Ansprüche 1 bis 8, dadurch gekennzeichnet, daß der Anschlußdraht (7) aus Kupfer besteht.

10. Kondensator nach einem der Ansprüche 1 bis 9, dadurch gekennzeichnet, daß die Stirnkontaktschicht (6) eine Schoopschicht ist.

11. Kondensator nach einem der Ansprüche 1 bis 10, dadurch gekennzeichnet, daß die Stirnkontaktschicht (6) aus Zink besteht.

12. Verfahren zur Herstellung eines Kondensators gemäß einem der Ansprüche 1 bis 11, dadurch gekennzeichnet, daß ein Kondensatorkörper (1) hergestellt wird, der an zwei Stirnseiten (5.1, 5.2) abwechselnd über die Stirnseiten überstehende Kondensatorbeläge (3, 4) aufweist, wobei auf einer Stirnseite (5.1 oder 5.2) der eine (3 bzw. 4) und auf der anderen Stirnseite (5.2 oder 5.1) der andere (4 bzw. 3) Kondensatorbelag übersteht, daß anschließend die Stirnseiten (5.1, 5.2) durch Aufspritzen oder Aufsprühen von geschmolzenem Metall mit einer den jeweils überstehenden Kondensatorbelag (3 bzw. 4) kontaktierenden Stirnkontaktschicht (6) versehen wird, daß dann an der Stirnseite (5.1 und/oder 5.2) ein Anschlußdraht (7) angeschweißt wird, der in einem ersten Verfahrensschritt mit einer Nickelschicht (9) und in einem zweiten Verfahrensschritt mit einer Zinn-oder Zinn-Blei-Schicht (10) versehen ist, und daß dann der Kondensatorkörper (1) einer erhöhten Temperatur von 80 bis 150°C über eine Zeitdauer von 2 bis 200 Stunden ausgesetzt wird.

13. Verfahren nach Anspruch 12, dadurch gekennzeichnet, daß vor der Temperaturbehandlung der Kondensatorkörper (1) mit einem isolierenden Imprägniermittel imprägniert wird.

14. Verfahren nach Anspruch 13, dadurch gekennzeichnet, daß vor der Imprägnierung eine erste Temperaturbehandlung bei einer Temperatur von 80 bis 130°C für eine Zeitdauer von 2 bis 200 Stunden vorgenommen wird.

15. Verfahren nach Anspruch 14, dadurch gekennzeichnet, daß die erste Temperaturbehandlung unter vermindertem Druck vorgenommen wird.

16. Verfahren nach Anspruch 15, dadurch gekennzeichnet, daß während wenigstens einer Temperaturbehandlung Über-oder Unterdruck angewendet wird.

17. Verfahren nach Anspruch 16, dadurch gekennzeichnet, daß vor oder während des Abkühlens der Druck auf normalen Atmosphärendruck gesenkt bzw. erhöht wird.